(19) Europäisches Patentamt / European Patent Office / Office européen des brevets

(11) **EP 4 703 816 A1**

(12) **EUROPEAN PATENT APPLICATION**
published in accordance with Art. 153(4) EPC

(43) Date of publication:
04.03.2026 Bulletin 2026/10

(21) Application number: 23934821.2

(22) Date of filing: 16.08.2023

(51) International Patent Classification (IPC):
*G05B 19/04* (2006.01)    *C02F 1/42* (2023.01)

(86) International application number:
PCT/CN2023/113227

(87) International publication number:
WO 2024/221650 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2023 CN 202310474358

(71) Applicant: Canature Health Technology Group
Co., Ltd.
Shanghai 201299 (CN)

(72) Inventors:
• SUN, Ying
  Shanghai 201299 (CN)
• QU, Yaming
  Shanghai 201299 (CN)
• TAO, Feng
  Shanghai 201299 (CN)
• HUANG, Dongming
  Shanghai 201299 (CN)

(74) Representative: Bjerkén Hynell KB
P.O. Box 1061
101 39 Stockholm (SE)

(54) **SOFT WATER REGENERANT DOSAGE CONTROL METHOD AND SYSTEM, AND STORAGE MEDIUM**

(57) Disclosed is a soft water regenerant dosage control method, comprising: acquiring operating parameters of a water softener (S1); and if the operating parameters of the water softener in a current water production period are greater than the maximum value in a first preset range, reducing the dosage of a soft water regenerant on the basis of a specified regenerant dosage of the water softener in a next regeneration period, and if the operating parameters of the water softener in the current water production period are smaller than the minimum value in the first preset range, increasing the dosage of the soft water regenerant on the basis of the specified regenerant dosage of the water softener in the next regeneration period (S5), wherein the first preset range is represented by means of a water production amount or an operating exchange capacity in a specified period. The dosage of a regenerant can be reasonably adjusted while the water quality is ensured, the waste of the regenerant is avoided, and the use costs of users are reduced.

FIG. 4

## Description

### TECHNICAL FIELD

The present invention relates to technical field of water treatment, and in particular to a soft water regenerant dosage control method for the use in a water softener. The present invention further relates to a soft water regenerant dosage control system for the use in water softener, and to a computer-readable storage medium having stored therein computer program which, when executed, is configured to implement the steps of soft water regenerant dosage control method.

### BACKGROUND

At present, ion exchange resin technology is generally used as a softening agent to achieve water softening in water treatment processes. Specifically, hardness is removed from water through ion exchange to soften water quality. When operating exchange capacity of ion exchange resin is exhausted, a regenerant is then required to regenerate the resin and restore its exchange capacity.

1. U.S. patent US6814872B2: Controller and method for controlling regeneration of a water softener

The patent discloses a regeneration controller as well as a method for controlling the regeneration of a water softener. The controller comprises a water meter configured to output an indicative signal of a amount of the influent water received by the water softener. A water hardness indicator, such as a conductivity meter or an ion selective electrode, is configured to output an indicative signal of hardness of influent water. A coupled processor is configured to receive respective signals from the water meter and the hardness indicator. The processor is further configured to calculate an indicative value of a total hardness level removed by water softener. A comparator is coupled to receive an indicative signal of resin capacity of the water softener. The comparator is further configured to receive indicative value of the total hardness, and to issue a regeneration command based on a comparison of the resin capacity based on the total hardness value.

2. Korean patent KR100851776B1: Softening device and regeneration control method thereof

The patent document provides a training device and a regeneration control method for detecting the hardness of the supplied water, which is used to control the regeneration timing based on the detected value of the water hardness. The system includes an inlet diameter measurement device (10) for measuring the hardness of the supplied water, which supplies data to an actuator (1) and a process quantity measurement device (11) for measuring the flow rate of operating water. It also includes a brine concentration detection device (8) for detecting the salt concentration of the brine, and a brine consumption detection device (9) for detecting brine consumption during regeneration. Additionally, there is a hardness leakage detection device (12) for measuring the hardness of the treated water and detecting hardness leakage after the system (1) is operated and hardness leakage occurs.

3. U.S. patent US4917794A: Regeneration sensing device

The patent discloses a regeneration sensing device for determining the state of water softening material and water in water softening tank in order to determine when regeneration of water softening material is required. The top and bottom sets of primary conductive probes are arranged at a predetermined distance from each other, positioned one above other within the water softening material. The probes are being oriented toward water softening material as well as water. The top and bottom sets of secondary conductive probes are also arranged at a predetermined distance within the water softening material. The secondary probes are being exposed only to the water. The probes of the top primary group are disposed adjacent to the probes of the top secondary group, and the probes of the bottom primary group are disposed proximate to the probes of the bottom secondary group. When the resistance or measurement values of secondary group probes are substantially equal to one another, top primary group probes are defined as a reference, and the probes of the bottom primary group are compared against the reference to determine when regeneration is required.

4. Canadian patent CA1299701C: Regeneration sensing device

The patent discloses a regeneration sensing device for determining the state of water softening material and water in a water softening tank, so as to determine when regeneration of water softening material is required. The top and bottom sets of primary conductive probes are arranged at a predetermined distance from each other, positioned one above other within the water softening material. The probes are being oriented toward water softening material as well as water. The top and bottom sets of secondary conductive probes are also arranged at a predetermined distance within the water softening material. The secondary probes are being exposed only to the water. The probes of the top primary group are disposed adjacent to the probes of the top secondary group, and the probes of the bottom primary group are disposed proximate to the probes of the bottom secondary group. When the resistance or measurement values of secondary group probes are substantially equal to one another, top primary group probes are defined as a reference, and the probes of the bottom primary group are compared against the reference to determine when regeneration is required.

5. U.S. patent US20210300785A1: Longitudinal in-situ impedance and resin monitoring sensor, and method of measuring and tracking the movement of hardness in the water softener utilizing the same

The patent discloses a sensor system and process that utilize the measurements of impedance/conductivity to track the movement of hardness in an ion exchange medium. The impedance/conductivity sensor is the vertically and longitudinally oriented axial longitudinal electrode system with electrodes placed within a bed of ion exchange material and separated by water as well as ion exchange material. The electrodes generally extend parallel to each other. The hard water is introduced into water softener and being softened by ion exchange material. The sensor tracks the hardness gradient, and the regeneration is initiated when it is determined that the ion exchange material is depleted or exhausted.

6. U.S. patent US11209413B2: Method for determining hardness concentration using a monovalent ion selective electrode

The patent document discloses an application method to provide a means for tracking the relative hardness of water at the outlet or exit of an ion exchange tower by utilizing ion selectivity to monitor water hardness. A monovalent cation exchange membrane (ion selective electrode) separates hard water from softened water within the water flow. A voltage is applied across the membrane to facilitate the movement of sodium, while the membrane excludes anions and scale-forming ions, and the current is measured. The change in current (Delta current) is used to determine the hardness level or hardness concentration in the influent stream. In a second application, the method estimates or detects the exhaustion of the ion exchanger and/or determines the regeneration time/cycle of the ion exchanger by using the ion selective membrane. Mixing the influent hard water with the effluent softened water allows the user to control the hardness level of the effluent.

7. U.S. patent US7966097B2: Method for regeneration of a water softener

The patent discloses a demand-initiated method for regenerating water softener. The water softener operates softening ion exchange bed within a defined capacity range, wherein resin is most effectively restored by exposure to brine. The reserve capacity of the softener is adjusted based on the amount of softening capacity consumed since the last regeneration, and the amount of saturated brine to be used in the next regeneration is determined. Regeneration is scheduled when the reserve capacity is exceeded or when the remaining available capacity is insufficient to meet the anticipated usage on the second day of the week. When the sum of resin bed exchange capacity consumed since the last regeneration, the variation in exchange capacity for the second day, and the average exchange capacity of resin bed for the second day exceeds the selected design exchange capacity, the method schedules regeneration.

8. U.S. patent US5544072A: Method for regeneration of a water softener

The patent discloses a demand-initiated method for regenerating water softener. The water softener operates softening ion exchange bed within a defined capacity range, wherein resin is most effectively restored by exposure to brine. The reserve capacity of the softener is adjusted based on the amount of softening capacity consumed since the last regeneration, and the amount of saturated brine to be used in the next regeneration is determined. Regeneration is scheduled when consumed capacity exceeds reserve capacity, or when remaining available capacity is insufficient to meet the expected usage for the next day of the week.

The prior art for controlling the regeneration of the water softener typically include the following methods:

1. Time-based regeneration by the fixed interval: The regeneration is controlled at a predetermined time interval, such as every seven days, either with a delay or immediately.

2. Time-based regeneration by the fixed day: The regeneration is controlled on a predetermined day of the week, such as every Tuesday, either with a delay or immediately.

3. Flow-based regeneration with preset regenerant dosage: One or more (usually one to three) regenerant dosages are being preset, each corresponding to fixed operating exchange capacity. The operating exchange capacity is defined as ion exchange capacity that the water softener can provide in one operational period. By dividing the operating exchange capacity by influent water hardness, the corresponding periodic water production amount is calculated to control regeneration, either with a delay or immediately.

4. Upgraded flow-based regeneration with preset regenerant dosage: One or more (usually from one to three) regenerant dosages are being preset, each corresponding to fixed operating exchange capacity. By dividing the operating exchange capacity by the influent water hardness, periodic water production amount is calculated. The system performs a scheduled daily calculation of consumed amount of water and compares it with the estimated water consumption amount for the following day (or reserved water amount for preset fixed value). When remaining water amount is smaller than required water amount for following day, the system calculates replenishment amount and initiates regeneration at the designated time of the current day.

5. Hybrid regeneration with preset regenerant dosage: Time-based and flow-based control modes are combined, and regeneration is controlled according to priority approach.

6. Sensor-based regeneration with the preset regenerant dosage: A sensing system is installed at the inlet or outlet of the ion exchange device, or axially within resin bed, which is typically for detecting impedance, conductivity, sodium ion concentration, hardness values or ratios to control regeneration.

However, various water softener regeneration control approaches in the prior art do not take into account the differences in water consumption amount patterns of end users as well as rationality, effectiveness and environmental friendliness of the equipment's reserved amount and preset time. However, when monitoring regeneration process of the equipment through sensors, since installation position of sensors is fixed, there may still be issues such as the poor adaptability to operating conditions of equipment or excessive redundancy. As a result, the soft water regenerant control approaches provided in the prior art suffer from low equipment utilization, waste of regenerant and water resources, and high user costs, and in some cases may even result in hardness leakage in the produced water.

## BRIEF SUMMARY

In the description of the present invention, a series of simplified conceptual forms are introduced. These simplified concepts are merely simplifications of prior art in technical field and will be further described in detail in detailed description of the embodiments. The summary of the invention is not intended to attempt to limit the key features or the essential technical features of the claimed technical solutions, nor is it intended to define the scope of the claimed invention.

The technical problem to be solved by present invention is to provide a soft water regenerant dosage control method and system capable of adaptively adjusting the dosage of a soft water regenerant according to the actual operating conditions of the water softener.

Another technical problem to be solved by the present invention is to provide a soft water regenerant dosage control method and system capable of predicting the water supply conditions (which at least include water consumption amount and/or flow rate) for next water production period based on actual operating conditions of water softener, and adjusting soft water regenerant dosage accordingly.

To solve the above technical problems, the present invention provides a soft water regenerant dosage control method, comprising:

S1, acquiring operating parameters of a water softener;

S2, if the operating parameters of water softener in current water production period are greater than maximum value of a first preset range, reducing the dosage of a soft water regenerant on the basis of the specified regenerant dosage of the water softener in the next regeneration period;

if the operating parameters of water softener in the current water production period are smaller than the minimum value of the first preset range, increasing the dosage of the soft water regenerant on the basis of the specified regenerant dosage of the water softener in the next regeneration period; wherein

the first preset range is represented by the water production amount or the operating exchange capacity in a specified period.

The initial value of first preset range is usually specified by softener manufacturer. The minimum value of the first preset range is generally determined based on regeneration period that user can tolerate as well as softener operating parameters, for example: whether the user can tolerate the regeneration once per day or once every three days; it can further be converted into required period water production amount or period operating exchange capacity based on time.

The maximum value of the first preset range is specified according to the equipment requirements, such as the backwash requirements or suspended matter removal requirements of the equipment.

In other words, the minimum value of first preset range is dynamically adjustable according to user preference, while the maximum value is relatively stable and only adjusted according to equipment design requirements.

Illustratively, if the user specifies regeneration once every three days, the minimum value of the first preset range can be obtained represented by the water production amount or the operating exchange capacity.

If the equipment requires regeneration once every seven days, the maximum value of the first preset range can be obtained represented by water production amount or operating exchange capacity.

The initially calculated first preset range, when further combined with the softener operating parameters, yields the overlapping portion as the final first preset range.

For example, initially calculated first preset range combined with supply capacity of water softener calculated based on the designed salt consumption reference range constitutes the final adopted first preset range.

This step can be understood as a preferred approach to obtain the first preset range, and should not be interpreted as limiting the means of obtaining the first preset range; the first preset range may also be directly specified.

Water production period refers to the interval between two successive regenerations of the soft water. The start of a water production period is the end of previous regeneration of the softening unit, and the end of the water production period is the start of next regeneration.

Regeneration period refers to the duration required for the softening unit to perform regeneration. The start of a regeneration period is the beginning of regeneration of softening unit, and the end of the regeneration period is the completion of regeneration of the softening unit.

Optionally, soft water regenerant dosage control method may be further improved, further comprising:
S3, if the operating parameters of the water softener in the current water production period fall within the first preset range, recalculating the dosage of the soft water regenerant so that the unit cost of softened water in the next regeneration period is minimized.

Optionally, soft water regenerant dosage control method may be further improved, further comprising:
S4, calculating and obtaining the estimated water consumption of a user for the next water production period based on the user's water consumption in at least the previous water production period, and obtaining corresponding estimated operating parameters of the water softener to update the first preset range according to the user's estimated water consumption.

Further, it should be noted that the estimated operating parameters of water softener can be obtained either by establishing the mathematical model or through the calibration.

S5, if the estimated operating parameters of the water softener exceed the maximum value of the first preset range, reducing the dosage of the soft water regenerant on the basis of a specified regenerant dosage of the water softener in the next regeneration period;
if operating parameters of the water softener in the current water production period are smaller than the minimum value of the first preset range, increasing the dosage of the soft water regenerant on the basis of the specified regenerant dosage of the water softener in the next regeneration period.

Optionally, soft water regenerant dosage control method may be further improved, further comprising:

S4, calculating the estimated water consumption amount of a user for the next water production period based on user's water consumption in at least previous water production period, and obtaining corresponding estimated operating parameters of the water softener to update the first preset range according to the estimated water consumption;
S5', if the estimated operating parameters of water softener exceed maximum value of first preset range, reducing the dosage of soft water regenerant on the basis of a specified regenerant dosage of the water softener in the next regeneration period;
if operating parameters of the water softener in the current water production period are smaller than the minimum value of the first preset range, increasing the dosage of the soft water regenerant on the basis of the specified regenerant dosage of the water softener in the next regeneration period;
if operating parameters of the water softener in the current water production period fall within the first preset range, recalculating the dosage of the soft water regenerant so that the unit cost of softened water in the next regeneration period is minimized.

Optionally, soft water regenerant dosage control method may be further improved, wherein when implementing step S3, the calculation of unit cost of softened water comprises at least one of the following:

unit cost of softened water = (periodic regenerant cost + periodic water consumption cost) / periodic water production amount;

unit cost of softened water = periodic water consumption cost / periodic water production amount;

unit cost of softened water = periodic regenerant cost / periodic water production amount.

Regenerant cost refers to the cost of regenerant consumed to achieve periodic water production amount or periodic operating exchange capacity of the resin of the water softener.

Regeneration water cost refers to total cost of water consumed during regeneration process to achieve the periodic water production amount or the periodic operating exchange capacity of the resin of the water softener.

Optionally, the soft water regenerant dosage control method described above may be further improved, wherein the operating parameters of the soft water machine include at least one of the following: periodic water production amount, periodic operating exchange capacity, or periodic water production cycle.

It should be noted that, regardless of which parameter is selected as the operating parameter, subsequent approaches may be executed by converting them into same evaluation standard through calculation. That is, any operating parameter of the water softener that can be represented by water production amount or operating exchange capacity of the specified period can be converted and applied in present invention. Accordingly, selecting an operating parameter of the water softener other than the exemplary ones provided herein shall also fall within the scope of operating parameters of water softener of the present invention, as long as the selected operating parameter of the water softener can be represented by water production amount or operating exchange capacity. The exemplary conversion relationships are provided as follows:

Periodic water production amount refers to total amount of softened water produced from time when the water softener starts operating after regeneration until failure, wherein

$$\text{periodic water production amount} = \text{operating flow rate} \times \text{operating time};$$

Periodic operating exchange capacity represents the ion exchange capacity provided by the water softener during one operating period.

Exemplarily, periodic operating exchange capacity = operating flow rate $\times$ operating time $\times$ influent water hardness. The exemplary formula is the simplified algorithm, and other calculation methods, such as integral calculus, may also be used to obtain accurate results.

Optionally, soft water regenerant dosage control method may be further improved, wherein the increase or decrease of dosage of the soft water regenerant is a specified value or a calibrated value.

Accordingly, dosage of soft water regenerant may also be obtained by establishing a mathematical model. The mathematical model is not an essential technical feature of present invention. The technical problem to be solved by present invention can be addressed based on specified value or calibrated value. The mathematical model is a preferred technical feature.

To solve the above technical problems, a computer-readable storage medium storing a computer program is provided by present invention, wherein the computer program, when executed, is configured to perform the steps in any one of the above-mentioned methods for controlling the dosage of soft water regenerant.

To solve the above technical problems, the present invention provides a soft water regenerant dosage control system, comprising:

a control module, in which a first preset range is stored; if the operating parameter of water softener in the current water production period is greater than the maximum value of the first preset range, dosage of soft water regenerant in the next regeneration period is being reduced based on specified dosage of the regenerant of the water softener.

If the operating parameter of water softener in the current water production period is smaller than minimum value of first preset range, the dosage of the soft water regenerant is being increased in the next regeneration period based on specified dosage of the regenerant of the water softener. The control module may employ a controller in prior art, such as an MCU.

The first preset range is represented by the water production amount of a specified period or the operating exchange capacity.

The operating parameter of the water softener required by the control module can be obtained through a separately provided acquisition module, which may use sensors in prior art, such as the flow meter. The operating parameter of the water softener may also be input externally through a reserved control interface, with the option of local input or remote input (For example, obtaining it through cloud computing technology).

The operating parameter of the water softener in the current water production period is smaller than the minimum value of the first preset range.

Optionally, soft water regenerant dosage control system may be improved, wherein the control module is further configured to perform the following control:

if operating parameter of the water softener in the current water production period falls within the first preset range, the soft water regenerant dosage is recalculated so that the unit cost of the softened water in the next regeneration period is minimized.

Optionally, soft water regenerant dosage control system may be improved, wherein the control module is further configured to perform the following control:

based on the user's water consumption in at least the previous water-making cycle, the estimated water consumption for the next water-making cycle is calculated. The corresponding estimated working parameters of the water softener are obtained according to the estimated water consumption, and the first preset range is updated accordingly; if estimated operating parameter of water softener is greater than maximum value of the first preset range, the soft water regenerant dosage in the next regeneration period is being reduced based on the specified regenerant dosage of the water softener; if the operating parameter of the water softener in current water production period is smaller than the minimum value of the first preset range, the soft water regenerant dosage in the next regeneration period is being increased based on the specified regenerant dosage of the water softener.

Optionally, soft water regenerant dosage control system may be improved, wherein the control module is further configured to perform the following control:

based on the user's water consumption in at least the previous water-making cycle, the estimated water consumption for the next water-making cycle is calculated. The corresponding estimated working parameters of the water softener are obtained according to the estimated water consumption, and the first preset range is updated accordingly; if estimated operating parameter of water softener is greater than maximum value of the first preset range, the soft water regenerant dosage in the next regeneration period is being reduced based on the specified regenerant dosage of the water softener; if the operating parameter of the water softener in current water production period is smaller than the minimum value of the first preset range, the soft water regenerant dosage in the next regeneration period is being increased based on the specified regenerant dosage of the water softener; if the operating parameter of water softener in the current water production period falls within the first preset range, recalculating dosage of soft water regenerant such that the unit cost of softened water is minimized in the next regeneration period.

Optionally, soft water regenerant dosage control system may be improved, wherein calculation of unit cost of softened water comprises at least one of the following calculation methods:

unit cost of softened water = (periodic regenerant cost + periodic water consumption cost) / periodic water production amount;

unit cost of softened water = periodic water consumption cost / periodic water production amount;

unit cost of softened water = periodic regenerant cost / periodic water production amount.

Optionally, soft water regenerant dosage control system may be improved, wherein operating parameter of water softener comprises at least one of a periodic water production amount, an operating exchange capacity of the water production period, or a water production period.

Optionally, soft water regenerant dosage control system may be improved, wherein increase or decrease in the dosage of soft water regenerant is a specified value or a calibrated value.

The present invention can at least achieve the following technical effects:

First, it should be noted that the following adjustments to the regenerant dosage are all made on the basis of the specified regenerant dosage of the water softener. The specified regenerant dosage of the water softener may be a plurality of factory-set dosage levels, such as high, medium, and low, with a corresponding regenerant dosage designed for each level.

Furthermore, the water softener has a designed baseline regenerant dosage range as well. Designed baseline regenerant dosage range is limit range that ensures normal operation of water softener, which is specified by manufacturer when designing water softener. For any water softener that can operate normally, its regenerant dosage falls within designed baseline regenerant dosage range.

1. The present invention differs from regenerant dosage control approaches of the prior art (refer to background technology) in that it can dynamically adjust regenerant dosage of next regeneration period according to actual operating conditions (operating parameters) of the water softener, thereby overcoming the defect of the existing soft water regenerant dosage control approaches with fixed-parameter regeneration (quantitative/time-based). Under the premise of ensuring water quality, it can reasonably adjust regenerant dosage, avoid wastage, and reduce the user's consumption cost.

2. In further optimized approach of the present invention, on the basis of achieving technical effect described in item 1 above, the present invention further optimizes regenerant dosage control approach. Under premise of ensuring water quality and after a first optimized adjustment of the regenerant dosage (so that the dosage is reasonable but not necessarily with the lowest cost), the approach can compute a second optimized adjustment of the regenerant dosage according to user-selected parameters of sensitivity to the soft water consumables (for example, whether the user is more concerned about water consumption amount or regenerant dosage). This ensures that the unit cost of softened water is minimized in next regeneration period, thereby further reducing user costs.

3. In a still further optimized approach, on the basis of achieving the technical effect described in item 2 above, the present invention further optimizes regenerant dosage control approach. Under the premise of ensuring water quality, a first optimized adjustment as well as a second optimized adjustment of the regenerant dosage, the approach predicts the estimated water consumption of the user for the next water production period based on at least the water consumption of previous water production period (represented by periodic water production amount, operating exchange capacity of water production period, and/or flow rate). Based on estimated water consumption of the user, the corresponding estimated operating parameters of water softener are obtained to update first preset range. The estimated water consumption of user is then compared with first preset range (i.e., to further optimize the second optimized adjustment of regenerant dosage). After three optimized adjustments of the regenerant dosage, water quality and user water consumption amount can both be ensured, regenerant dosage can be reasonably adjusted, waste can be avoided, and user costs can be further reduced.

4. In a yet further optimized approach, on the basis of achieving the technical effect described in item 3 above, the present invention further optimizes regenerant dosage control approach. Under the premise of ensuring water quality, a first optimized adjustment as well as a second optimized adjustment of regenerant dosage, the approach predicts estimated water consumption of the user for the next water production period based on the water consumption of at least the previous water production period (represented by the periodic water production amount, operating exchange capacity of water production period, and/or flow rate). Based on the estimated water consumption, the corresponding estimated operating parameters of water softener are obtained, and the estimated water consumption is compared with the first preset range (i.e., to further optimize the second optimized adjustment of regenerant dosage). After completing a third optimized adjustment of regenerant dosage, the approach further computes a fourth optimized adjustment of regenerant dosage according to the user-selected parameters of sensitivity to the soft water consumables (for example, whether the user is more concerned about the water consumption cost or the regenerant cost). It should be noted that, in this case, the selected sensitivity parameter of soft water consumables may be the same as, or different from, the sensitivity parameter of soft water consumables selected during second optimized adjustment of the regenerant dosage. After four optimized adjustments of regenerant dosage, water quality as well as water consumption of user can both be ensured, regenerant dosage can be reasonably adjusted, regenerant wastage can be avoided, and user costs can be further reduced.

## BRIEF DESCRIPTION OF THE DRAWINGS

The drawings of present invention are intended to illustrate general characteristics of the methods, structures, and/or materials used in the certain exemplary embodiments of the invention, and to supplement the description in the specification. However, the drawings of the present invention are schematic and not necessarily drawn to scale, and may therefore not accurately reflect precise structure or performance characteristics of any given embodiment. The drawings of the present invention should not be construed as limiting or restricting the range of values or properties encompassed by exemplary embodiments of present invention. Further details of the present invention are described below in conjunction with the drawings and the specific embodiments:

FIG. 1 is a schematic flow diagram of first embodiment of the present invention.
FIG. 2 is a schematic flow diagram of second embodiment of the present invention.
FIG. 3 is a schematic flow diagram of third embodiment of the present invention.
FIG. 4 is a schematic flow diagram of fourth embodiment of the present invention.
FIG. 5 is a schematic flow diagram of fifth embodiment of the present invention.
FIG. 6 is a schematic flow diagram of sixth embodiment of the present invention.

## DETAILED DESCRIPTION OF THE DISCLOSURE

The following describes the embodiments of the present invention with reference to the specific exemplary embodiments. Those skilled in the prior art can fully understand other advantages and technical effects of the invention based on the disclosure of this specification. The present invention may also be implemented or applied in different specific embodiments, and various details disclosed in this specification may be applied from different perspectives, with modifications or changes made without departing from the overall inventive concept. It should be noted that, in the absence of conflict, features of the following embodiments and features disclosed in these embodiments may be combined with each other. The exemplary embodiments of present invention described below may be implemented in a variety of forms, and should not be construed as limited to the specific embodiments set forth herein. It should be understood that these embodiments are provided to ensure that disclosure of the present invention is thorough as well as complete, and to fully convey the technical solutions of these exemplary embodiments to those skilled in the art.

Embodiment 1

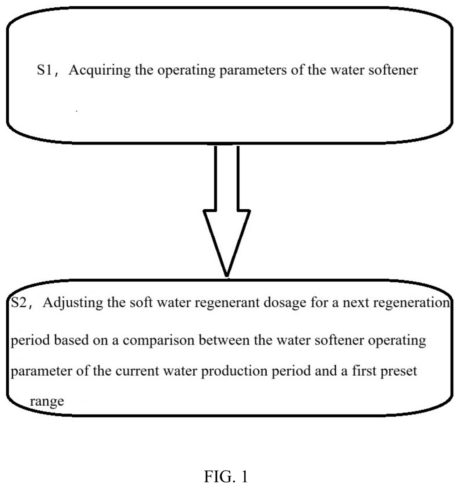

Referring to FIG. 1, the present invention provides a method for controlling the soft water regenerant dosage, comprising the following steps:

S1, acquiring the operating parameters of the water softener;

operating parameters of water softener include periodic water production amount, operating exchange capacity of water production period, or water production period at least one thereof, and may also be a combination of two or more thereof;

S2, if the estimated water softener operating parameter is greater than the maximum value of first preset range, reducing soft water regenerant dosage for the next regeneration period based on the water softener's specified regenerant dosage;

if the water softener operating parameter of the current water production period is smaller than minimum value of the first preset range, increasing soft water regenerant dosage for the next regeneration period based on the water softener's specified regenerant dosage;

first preset range is represented by water production amount of a specified period or the operating exchange capacity;

if the operating parameter of the water softener adopts water production period, it may be converted by calculation into the water production amount or the operating exchange capacity within the water production period.

It should be noted that the reduced soft water regenerant dosage or increased soft water regenerant dosage may be a specified value, which can be obtained by manufacturer designation, calibration, or model calculation.

It may also be an externally introduced input value, such as remote instruction input (remote network instruction output, local cloud input, etc.) and/or the local instruction input (handheld smart device or dedicated device, etc.).

For two adjustments of soft water regenerant dosage, the reduced regenerant dosage as well as increased regenerant dosage may be the same or different; for example, if reduced regenerant dosage of this period is A, reduced regenerant dosage of the next period may be A or B, and the increased regenerant dosage of the next period may also be A or B.

The technical effects of first embodiment can be further illustrated using following parameters:

For example, according to prior art, the water softener is configured for a household of four, with a per capita daily water consumption amount of 0.15 t, resulting in a calculated average daily water consumption amount of 0.6 t. The hardness of the local tap water is 500 mg/L (as $CaCO_3$). The regeneration mode is of a hybrid type, i.e., flow-type and time-type, in which the regeneration can be triggered when either condition is met. The user can tolerate one regeneration per day, and the device requires regeneration every seven days. Therefore, the water softener needs to provide 0.6 to 4.2 t of softened water to meet user demand.

Taking water softener KAINENG Health 0935 as an example, based on designed baseline salt consumption range, the minimum value of water softener operating parameter is calculated as 1.7 t (operating exchange capacity of 852 g), and the maximum value is set as 3.6 t (operating exchange capacity of 1,801 g). The data can be calculated based on designed baseline salt consumption range of water softener. Accordingly, minimum value of first preset range is 1.7 t (operating exchange capacity of 852 g), and maximum value is 3.6 t (operating exchange capacity of 1,801 g).

If regenerant dosage is set to "high", the water softener uses 4.639 kg of regenerant per regeneration, with a water consumption amount of 116 L per regeneration and a periodic water production amount of 3.6 t.

When the actual daily average water consumption amount of user is 0.5 t, the water softener operates until day 7 reaching a water production amount of 3.5 t, and regenerates at specified time, i.e., under time-type control, using a "high" regenerant dosage.

In this case, using technical solution of the first embodiment, when the maximum value of the first preset range is 3.6 t and the actual softened water provided by water softener exceeds actual seven-day water consumption amount of user, the regenerant dosage is being reduced. On one hand, this reduces the regenerant as well as water consumption amount per regeneration. On the other hand, regeneration control is adjusted to flow-type control, with time-type control serving as a backup.

If regenerant dosage is set to "low", the water softener uses 1.154 kg of regenerant per regeneration, with a water consumption amount of 84 L per regeneration and a periodic water production amount of 1.7 t.

When the user's actual daily average water consumption amount is 2.0 t, the water softener regenerates immediately or at specified time upon reaching 1.7 t of water production in one day, i.e., under flow-type control, using a "low" regenerant dosage.

In this case, using technical solution of the first embodiment, when minimum value of first preset range is 1.7 t and the actual daily water consumption amount of user exceeds 1.7 t, the regenerant dosage is being increased to ensure that water production period of water softener falls within first preset range. This avoids situations where immediate regeneration prevents water softener from continuing to provide soft water, forcing the user to rely solely on tap water; or where regeneration at the specified time in the evening, after reaching rated periodic water production amount or operating exchange capacity, results in gradually rising water hardness, or eventual resin saturation, causing produced water hardness to match inlet water hardness and affecting user experience. The first embodiment of the present invention dynamically adjusts the regenerant dosage to meet user requirements and avoid the service interruptions.

Embodiment 2

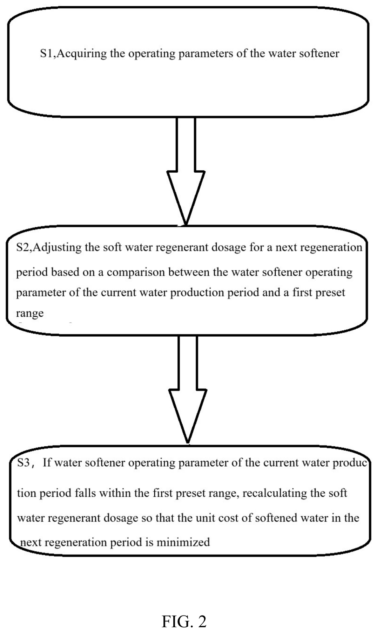

Referring to FIG. 2, the present invention provides a method for controlling the soft water regenerant dosage, which is based on Embodiment 1 described above, and the identical portions are not repeated herein. The method further comprises following steps:

S3, if operating parameter of water softener in the current water production period falls within the first preset range, the soft water regenerant dosage is recalculated so that the unit cost of the softened water in the next regeneration period is minimized.

The calculation for unit cost of soft water can be specified by the manufacturer or the user. The calculation may be based on selection of sensitivity parameters affecting unit cost of soft water by manufacturer or user. The unit cost of softened water is calculated using at least one of following methods, or a combination of two or more of these methods:

Unit cost of softened water = (periodic regenerant cost + periodic water consumption cost) / periodic water production amount;

Unit cost of softened water = periodic water consumption cost / periodic water production amount;

Unit cost of softened water = periodic regenerant cost / periodic water production amount.

Continuing with the water softener used in Embodiment 1 as an example, when the regenerant dosage is set to "high," regenerant dosage for each regeneration period is 4.639 kg, water consumption amount during regeneration is 116 L, and the periodic water production amount is 3.6 t. When actual daily average water consumption amount of the user is 0.6 t, the water softener operates until the day 6, reaching a water production of 3.6 t, and regeneration occurs at the specified time, i.e., under the flow-based control.

In this case, using the technical solution of Embodiment 2, based on regeneration period setting of the device, the first preset range has a minimum of 0.6 t and a maximum of 3.6 t. The actual available soft water is 3.6 t, which falls within the first preset range, and the regenerant dosage is further optimized to minimize the unit cost of softened water.

(1) If the softening salt costs 65 CNY per 10 kg and the water cost is 5 CNY per ton, the unit cost of softened water for the user is as follows:

Unit cost of softened water = (periodic regenerant cost + periodic water consumption cost) / periodic water production amount, which is 8.53 CNY per ton;

Unit cost of softened water = periodic water consumption cost / periodic water production amount, which is 0.17 CNY per ton;

Unit cost of softened water = periodic regenerant cost / periodic water production amount, which is 8.36 CNY per ton.

The designed range of regenerant dosage is 48 g salt/L resin to 192 g salt/L resin. The unit cost of softened water is calculated for different regenerant dosages.

For example, with the regenerant dosage of 48 g salt/L resin, the regenerant dosage per regeneration period is 1.154 kg, the water consumption amount during regeneration is 84 L, and the periodic water production amount is 1.70 t. The unit cost of softened water is as follows:

Unit cost of softened water = (periodic regenerant cost + periodic water consumption cost) / periodic water production amount, which is 4.64 CNY per ton;

Unit cost of softened water = periodic water consumption cost / periodic water production amount, which is 0.25 CNY per ton;

Unit cost of softened water = periodic regenerant cost / periodic water production amount, which is 4.39 CNY per ton.

If the user selects sensitivity parameter as "unit cost of softened water = (periodic regenerant cost + periodic water consumption cost) / periodic water production amount", and regenerant dosage of 48 g salt/L resin yields lowest cost, with an actual daily average water consumption amount of 0.6 t, the calculated regeneration interval is 2 days, meeting user's demand and within the first preset range. Accordingly, the regenerant dosage is set to 48 g salt/L resin for the next regeneration period.

(2) If the softening salt costs 13 CNY per 10 kg and the water cost is 55 CNY per ton, the unit cost of softened water for the user is as follows:

Unit cost of softened water = (periodic regenerant cost + periodic water consumption cost) / periodic water production amount, which is 3.53 CNY per ton;

Unit cost of softened water = periodic water consumption cost / periodic water production amount, which is 1.86 CNY per ton;

Unit cost of softened water = periodic regenerant cost / periodic water production amount, which is 1.67 CNY per ton.

In this case, using the technical solution of Embodiment 2, if the first preset range has a minimum of 0.6 t and a maximum of 3.6 t, the actual available softened water is 3.6 t, which falls within first preset range, and regenerant dosage is further optimized to minimize the unit cost of softened water.

The designed regenerant dosage range is 48 g salt/L resin to 192 g salt/L resin, and the unit cost of softened water is calculated for different regenerant dosages.

For example, with the regenerant dosage of 96 g salt/L resin, regenerant dosage per regeneration period is 2.308 kg, water consumption amount during the regeneration is 95 L, and periodic water production amount is 2.71 t. The unit cost of softened water is as follows:

Unit cost of softened water = (periodic regenerant cost + periodic water consumption cost) / periodic water production amount, which is 3.07 CNY per ton;

Unit cost of softened water = periodic water consumption cost / periodic water production amount, which is 1.97 CNY per ton;

Unit cost of softened water = periodic regenerant cost / periodic water production amount, which is 1.11 CNY per ton.

For example, with regenerant dosage of 48 g salt/L resin, the regenerant dosage per regeneration period is 1.154 kg, the water consumption amount during regeneration is 84 L, and periodic water production amount is 1.70 t. The unit cost of softened water is as follows:

Unit cost of softened water = (periodic regenerant cost + periodic water consumption cost) / periodic water production amount, which is 3.62 CNY per ton;

Unit cost of softened water = periodic water consumption cost / periodic water production amount, which is 2.74 CNY per ton;

Unit cost of softened water = periodic regenerant cost / periodic water production amount, which is 0.88 CNY per ton.

If the user selects sensitivity parameter as "unit cost of softened water = (periodic regenerant cost + periodic water consumption cost) / periodic water production amount", and regenerant dosage of 96 g salt/L resin yields lowest cost, with an actual daily average water consumption amount of 0.6 t, the calculated regeneration interval is 4 days, meeting user's demand and within the first preset range. Accordingly, the regenerant dosage is set to 96 g salt/L resin and updated for the next regeneration period.

If the user selects sensitivity parameter as "unit cost of softened water = periodic water consumption cost / periodic water production amount", and the regenerant dosage of 192 g salt/L resin yields lowest cost, with an actual daily average water consumption amount of 0.6 t, calculated regeneration interval is 6 days, meeting the user's demand and within the first preset range. Accordingly, the regenerant dosage is set to 192 g salt/L resin and updated for the next regeneration period.

If the user selects the sensitivity parameter as "unit cost of softened water = periodic regenerant cost / periodic water production amount", and the regenerant dosage of 48 g salt/L resin yields lowest cost, with an actual daily average water consumption amount of 0.6 t, the calculated regeneration interval is 2 days, meeting user's demand and within the first preset range. Accordingly, the regenerant dosage is set to 48 g salt/L resin and updated for the next regeneration period.

Embodiment 3

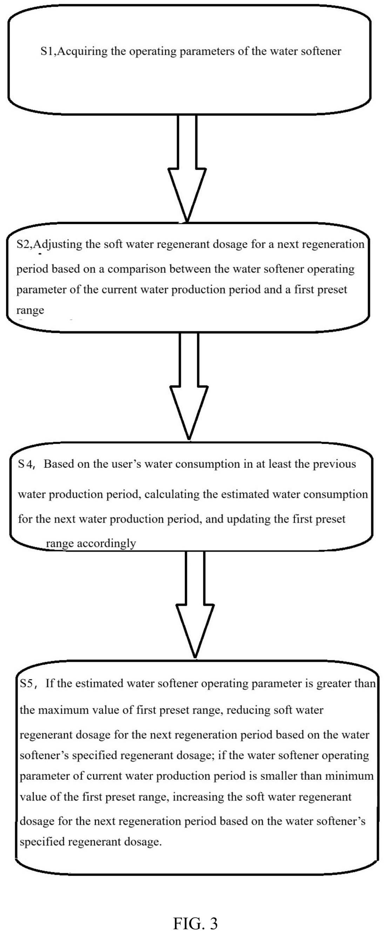

Referring to FIG. 3, the present invention provides a method for controlling the soft water regenerant dosage, which is based on Embodiment 1 described above, and the identical portions are not repeated herein. The method further comprises following steps:

S4, calculating and obtaining the estimated water consumption of a user for the next water production period based on the user's water consumption in at least the previous water production period, and obtaining corresponding estimated operating parameters of the water softener to update the first preset range according to the user's estimated water consumption.

It should be noted that, when water softener operating parameters of multiple water production periods are used as basis for calculation, water softener operating parameters can be processed using a reasonable existing calculation formula (for example, averaging, setting weights, etc.) so as to obtain a more accurate prediction.

S5, if the estimated operating parameter of water softener is greater than maximum value of the first preset range, soft water regenerant dosage in the next regeneration period is being reduced based on the specified regenerant dosage of the water softener;

if the operating parameter of the water softener in current water production period is smaller than the minimum value of the first preset range, the soft water regenerant dosage in the next regeneration period is being increased based on the specified regenerant dosage of the water softener.

In this case, continuing to take the water softener in Embodiment 1 as example, the technical solution of Embodiment 3 is employed.

According to predicted water production amount of next period, the periodic water production amount range, or operating exchange capacity range (where the prediction can be obtained via mathematical modeling or calibration), design-based baseline salt consumption range of water softener is used to calculate and update the minimum value of water softener operating parameter to 2.0 t (operating exchange capacity of 1,022 g) and the maximum value to 4.3 t (operating exchange capacity of 2,161 g). Thus, the updated first preset range is set to minimum value of 2.0 t (operating exchange capacity of 1,022 g) as well as maximum value of 4.2 t (operating exchange capacity of 2,071 g).

At this time, when the regenerant dosage is set to "high", the actual softened water provided is 4.3 t, which is greater than 4.2 t (7 days). In this case, regenerant dosage is being reduced. On one hand, this can reduce the regenerant cost as well as water consumption cost per regeneration of the water softener. On the other hand, the regeneration mode is adjusted to flow-based control, with time-based control serving as a backup.

Embodiment 4

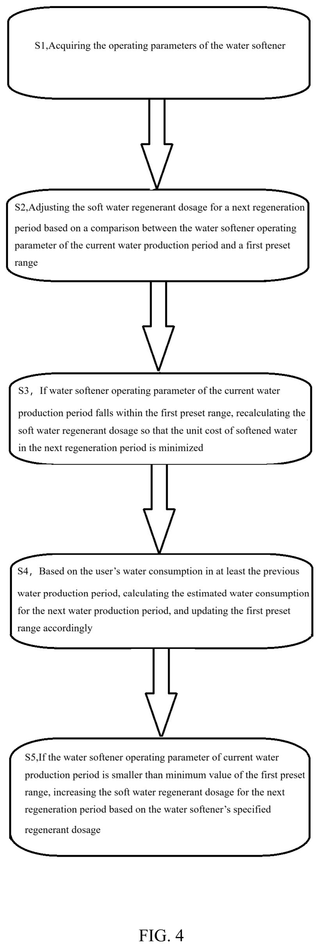

Referring to FIG. 4, the present invention provides a method for controlling the soft water regenerant dosage, which is based on Embodiment 2 described above, and the identical portions are not repeated herein. The method further comprises following steps:

S4, calculating and obtaining the estimated water consumption of a user for the next water production period based on the user's water consumption in at least the previous water production period, and obtaining corresponding estimated operating parameters of the water softener to update the first preset range according to the user's estimated water consumption.

It should be noted that, when water softener operating parameters of multiple water production periods are used as basis for calculation, water softener operating parameters can be processed using a reasonable existing calculation formula (for example, averaging, setting weights, etc.) so as to obtain a more accurate prediction.

S5, if the estimated operating parameter of water softener is greater than maximum value of the first preset range, soft water regenerant dosage in the next regeneration period is being reduced based on the specified regenerant dosage of the water softener;

if the operating parameter of the water softener in current water production period is smaller than the minimum value of the first preset range, the soft water regenerant dosage in the next regeneration period is being increased based on the specified regenerant dosage of the water softener.

In this case, continuing to take the water softener of Embodiment 2 as an example, based on a set regeneration period of 1 to 7 days and user's daily average water consumption amount of 0.6 t, the user's minimum value of the water consumption amount is determined to be 0.6 t (1 day), and maximum value is determined to be 4.2 t (7 days). Based on designed baseline salt consumption range of water softener, the minimum value of the water softener operating parameter is calculated to be 1.7 t (operating exchange capacity of 852 g), and the maximum value is set to be 3.6 t (operating exchange capacity of 1,801 g). This data can be obtained from the designed baseline salt consumption range of water softener. Accordingly, minimum value of the first preset range is 1.7 t (operating exchange capacity of 852 g), and maximum value is 3.6 t (operating exchange capacity of 1,801 g).

If the user selects the sensitivity parameter as "unit cost of softened water = periodic water consumption cost / periodic water production amount", and the regenerant dosage of 192 g salt/L resin yields lowest cost, regenerant dosage is determined to be set to "high" for next regeneration. In this case, the water softener uses 4.639 kg of the regenerant dosage for regeneration, consumes 116 L of water during regeneration process, and provides a periodic water production amount of 3.6 t.

According to predicted next periodic water production amount, the periodic water production range, or operating exchange capacity range (the predicted value can be obtained by mathematical modeling or calibration), and based on designed baseline salt consumption range of the water softener, the minimum value of the water softener operating parameter is set to be 2.0 t (operating exchange capacity of 1,022 g), and the maximum value is set to be 4.3 t (operating exchange capacity of 2,161 g). Accordingly, updated minimum value of the first preset range is 2.0 t (operating exchange capacity of 1,022 g), and maximum value is 4.2 t (operating exchange capacity of 2,071 g).

At this point, when regenerant dosage is set to "high," the actual soft water provided is 4.3 t, which is greater than 4.2 t (7 days), the regenerant dosage is being reduced. On one hand, this can reduce regenerant cost as well as water consumption cost per regeneration of the water softener. On the other hand, the regeneration mode is adjusted to flow-based control, with time-based control serving as a backup.

Embodiment 5

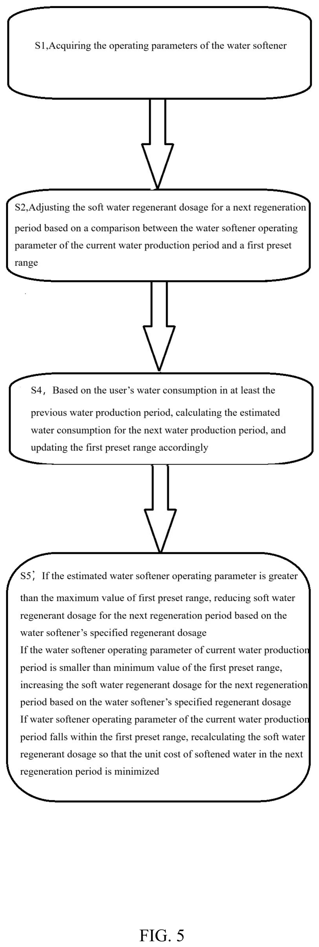

Referring to FIG. 5, the present invention provides a method for controlling the soft water regenerant dosage, which is based on Embodiment 1 described above, and the identical portions are not repeated herein. The method further comprises following steps:

S4, calculating and obtaining the estimated water consumption of a user for the next water production period based on the user's water consumption in at least the previous water production period, and obtaining corresponding estimated operating parameters of the water softener to update the first preset range according to the user's estimated water consumption.

It should be noted that, when water softener operating parameters of multiple water production periods are used as basis for calculation, water softener operating parameters can be processed using a reasonable existing calculation formula (for example, averaging, setting weights, etc.) so as to obtain a more accurate prediction.

S5', if the estimated operating parameters of water softener exceed maximum value of first preset range, reducing the dosage of soft water regenerant on the basis of a specified regenerant dosage of the water softener in the next regeneration period;

if operating parameters of the water softener in the current water production period are smaller than the minimum value of the first preset range, increasing the dosage of the soft water regenerant on the basis of specified regenerant dosage of the water softener in the next regeneration period;

if operating parameters of the water softener in the current water production period fall within the first preset range, recalculating the dosage of the soft water regenerant so that the unit cost of softened water in the next regeneration period is minimized.

The range of the periodic water production amount or operating exchange capacity of the next water production period, obtained based on user's predicted water consumption, is used as the basis for adjusting the regenerant dosage of the next regeneration period so as to avoid excessive or insufficient regenerant dosage. After completing adjustment of regenerant dosage for the next regeneration period, the Embodiment 5 further takes into account how to reduce the unit cost of softened water based on predicted periodic water production amount range or working exchange capacity range of the next water production period. Furthermore, the unit cost of softened water is added as an optimization condition, so that the unit cost of softened water in the next regeneration period is minimized, i.e., after the adjustment based on predicted values, the regenerant dosage corresponding to the lowest unit cost of softened water is selected.

In this case, taking the water softener in Embodiment 1 as an example, the technical solution of Embodiment 5 is applied. According to the predicted periodic water production amount, periodic water production amount range, or operating exchange capacity range of the next period (which may be obtained by mathematical modeling or calibration), and based on designed baseline salt consumption range of water softener, it is calculated that the minimum value of the operating parameter is set to be 2.0 t (operating exchange capacity of 1,022 g), and the maximum value is set to be 4.3 t (operating exchange capacity of 2,161 g). Thus, the updated first preset range is determined with a minimum value of 2.0 t (operating exchange capacity of 1,022 g) and a maximum value of 4.2 t (operating exchange capacity of 2,071 g).

At this time, when regenerant dosage is set to "high", the actual soft water provided is 4.3 t, which is greater than 4.2 t (7 days), and the regenerant dosage is being reduced. On the one hand, this reduces regenerant cost and water consumption cost per regeneration of the water softener. On the other hand, the regeneration control is adjusted to flow-based control, with time-based control as a backup. If the user selects sensitivity parameter as "unit cost of softened water = periodic water consumption cost / periodic water production amount", and regenerant dosage of 165 g salt/L resin yields lowest cost, the calculated regeneration interval is 7 days and within the first preset range. Accordingly, regenerant dosage is determined to be adjusted from previous 192 g salt/L resin to 165 g salt/L resin, and the regenerant dosage is updated accordingly.

Embodiment 6

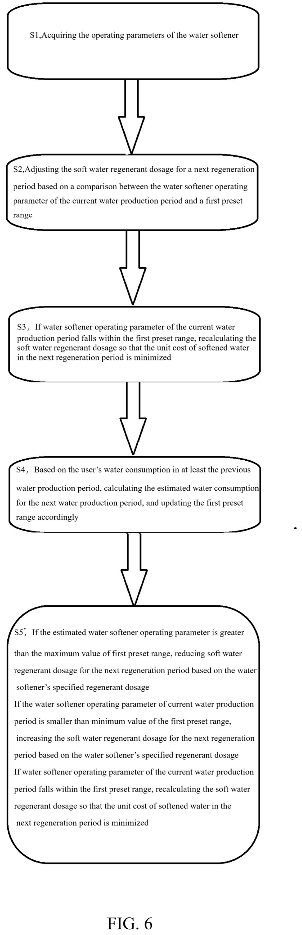

Referring to FIG. 6, the present invention provides a method for controlling the soft water regenerant dosage, which is based on Embodiment 2 described above, and the identical portions are not repeated herein. The method further comprises following steps:

S4, calculating and obtaining the estimated water consumption of a user for the next water production period based on the user's water consumption in at least the previous water production period, and obtaining corresponding estimated operating parameters of the water softener to update the first preset range according to the user's estimated water consumption.

It should be noted that, when water softener operating parameters of multiple water production periods are used as basis for calculation, water softener operating parameters can be processed using a reasonable existing calculation formula (for example, averaging, setting weights, etc.) so as to obtain a more accurate prediction.

S5', if the estimated operating parameters of water softener exceed maximum value of first preset range, reducing the dosage of soft water regenerant on the basis of a specified regenerant dosage of the water softener in the next regeneration period;

if operating parameters of the water softener in the current water production period are smaller than the minimum value of the first preset range, increasing the dosage of the soft water regenerant on the basis of the specified regenerant dosage of the water softener in the next regeneration period.

In this case, taking the water softener in Embodiment 2 as an example: assuming the regeneration period is set to 1 to 7 days, and user's daily average water consumption amount is 0.6 t, then the minimum user water consumption amount is 0.6 t (1 day) and the maximum is 4.2 t (7 days). Based on the designed baseline salt consumption range of water softener, it is calculated that minimum operating parameter is 1.7 t (operating exchange capacity of 852 g), and the maximum is 3.6 t (operating exchange capacity of 1,801 g). Accordingly, the first preset range is set to a minimum value of 1.7 t (operating exchange capacity of 852 g) and a maximum value of 3.6 t (operating exchange capacity of 1,801 g).

If the user selects the sensitivity parameter as "unit cost of softened water = periodic water consumption cost / periodic water production amount", and regenerant dosage of 192 g salt/L resin yields lowest cost, then it is determined that the regenerant dosage for the next regeneration is set to "high". In this case, the water softener consumes 4.639 kg of regenerant, regeneration process consumes 116 L of water, and the periodic water production amount is 3.6 t.

Based on the predicted periodic water production amount, periodic water production range or operating exchange capacity range (which may be obtained by the mathematical modeling or calibration), and based on baseline salt consumption range of water softener, it is calculated that minimum operating parameter is 2.0 t (operating exchange capacity of 1,022 g), and maximum is 4.3 t (operating exchange capacity of 2,161 g). Thus, updated first preset range is determined with a minimum value of 2.0 t (operating exchange capacity of 1,022 g) and a maximum value of 4.2 t (operating exchange capacity of 2,071 g).

At this time, when regenerant dosage is set to "high", the actual soft water provided is 4.3 t, which is greater than 4.2 t (7 days), and therefore regenerant dosage is being reduced. On the one hand, this reduces regenerant cost and water consumption cost per regeneration of water softener. On the other hand, the regeneration control is adjusted to flow-based control, with time-based control as a backup.

If the user selects the sensitivity parameter as "unit cost of softened water = periodic water consumption cost / periodic water production amount", and regenerant dosage of 165 g salt/L resin yields the lowest cost, the calculated regeneration interval is 7 days and within the first preset range. Accordingly, the regenerant dosage is determined to be adjusted from 192 g salt /L resin to 165 g salt/L resin, and the regenerant dosage is updated accordingly.

Embodiment 7

The present invention provides a computer-readable storage medium in which the computer program is stored. When executed, computer program is configured to implement the steps of the method for controlling the dosage of soft water regenerant according to any one of Embodiments 1 to 6.

The computer-readable medium includes permanent and non-permanent, removable and non-removable media that can store the information by any method or technology. The information may comprise computer-readable instructions, data structures, program modules, or other data. Examples of computer-readable medium include, but are not limited to: phase change memory (PRAM), static random access memory (SRAM), dynamic random access memory (DRAM), other types of random access memory (RAM), read-only memory (ROM), electrically erasable programmable read-only memory (EEPROM), flash memory or the other memory technologies, compact disc read-only memory (CD-ROM), digital versatile disc (DVD) or the other optical storage, magnetic tape, magnetic disk storage, or other magnetic storage devices, or the any other non-transitory medium that can be accessed by a computing device. As defined herein, the computer-readable medium does not include the non-transitory computer-readable media such as modulated data signals and carrier waves.

Embodiment 8

The present invention provides a system for controlling the soft water regenerant dosage, which may be implemented based on hardware architecture in prior art, comprising:

An acquisition module, which is configured to acquire the operating parameters of water softener. The operating parameters of water softener include at least one of the periodic water production amount, operating exchange capacity of water production period, or water production period, or a combination of two or more thereof.

A control module, which is pre-stored with a first preset range. When the operating parameter of water softener in current water production period is greater than the maximum value of the first preset range, dosage of regenerant in the next regeneration period is being reduced on the basis of the water softener specified regenerant dosage.

If current water softener operating parameter of water production period is smaller than minimum value of the first preset range, the regenerant dosage for the next regeneration period is being increased based on the water softener's specified regenerant dosage.

The first preset range is represented by the water production amount of a specified period or the operating exchange capacity.

It should be noted that reduced or increased soft water regenerant dosage may be a specified value, which may be obtained through manufacturer settings, calibration or model calculation;

or it may be obtained via externally introduced inputs, such as the remote command inputs (remote network command outputs, local cloud inputs, etc.) and/or the local command inputs (handheld smart devices or dedicated devices, etc.).

In the case of the remote input, the controller with a communication module may be selected.

For each control adjustment of soft water regenerant dosage, reduction or increase may be the same or different. For example, if the reduced regenerant dosage in current period is A, then the reduced dosage in the next period may be A or B, and the increased dosage in the next period may also be A or B.

Embodiment 9

The present invention provides a system for controlling the soft water regenerant dosage, which is implemented based on Embodiment 7, and the identical portions are not repeated herein. The control module optionally further performs the following control:

If operating parameters of the water softener in current water production period fall within the first preset range, the dosage of the soft water regenerant is recalculated so that the unit cost of softened water in the next regeneration period is minimized.

The calculation of unit cost of softened water may be specified by the manufacturer or the user, and may be selected according to the sensitivity to influencing parameters. The calculation of the unit cost of the softened water includes at least one of the following, or a combination of two or more:

Unit cost of softened water = (periodic regenerant cost + periodic water consumption cost) / periodic water production amount;

Unit cost of softened water = periodic water consumption cost / periodic water production amount;

Unit cost of softened water = periodic regenerant cost / periodic water production amount.

Embodiment 10

The present invention provides a system for controlling the soft water regenerant dosage, which is implemented based on Embodiment 7, and the identical portions are not repeated herein. The control module optionally further performs the following control:

The estimated water consumption amount of the user is calculated in the next water production period based on at least the previous water production period of the user, and the corresponding estimated water softener operating parameter according to the estimated water consumption amount is obtained, so as to calculate and update the first preset range.

If the estimated water softener operating parameter is greater than maximum value of first preset range, regenerant dosage for next regeneration period is being reduced based on water softener's specified regenerant dosage.

If current water softener operating parameter of water production period is smaller than minimum value of the first preset range, regenerant dosage for next regeneration period is being increased based on the water softener's specified regenerant dosage.

Embodiment 11

The present invention provides a system for controlling the soft water regenerant dosage, which is implemented based on Embodiment 7, and the identical portions are not repeated herein. The control module optionally further performs the following control:

The estimated water consumption amount of the user is calculated in next water production period based on at least the previous water production period of the user, and the corresponding estimated water softener operating parameter according to the estimated water consumption amount is obtained, so as to calculate and update the first preset range.

If the estimated water softener operating parameter is greater than maximum value of first preset range, regenerant dosage for next regeneration period is being reduced based on water softener's specified regenerant dosage.

If current water softener operating parameter of water production period is smaller than minimum value of the first preset range, regenerant dosage for next regeneration period is being increased based on the water softener's specified regenerant dosage.

If operating parameters of the water softener in the current water production period fall within the first preset range, the dosage of the soft water regenerant is recalculated so that the unit cost of softened water in the next regeneration period is minimized.

Embodiment 12

The present invention provides a system for controlling the soft water regenerant dosage, which is implemented based on Embodiment 8, and the identical portions are not repeated herein. The control module optionally further performs the following control:

The estimated water consumption amount of the user is calculated in the next water production period based on at least the previous water production period of the user, and the corresponding estimated water softener operating parameter according to the estimated water consumption amount is obtained, so as to calculate and update a first preset range.

If the estimated water softener operating parameter is greater than maximum value of first preset range, regenerant dosage for next regeneration period is being reduced based on water softener's specified regenerant dosage.

If current water softener operating parameter of water production period is smaller than minimum value of the first preset range, regenerant dosage for next regeneration period is being increased based on the water softener's specified regenerant dosage.

Embodiment 13

The present invention provides a system for controlling the soft water regenerant dosage, which is implemented based on Embodiment 8, and the identical portions are not repeated herein. The selective control module further comprises following controls:

calculating and obtaining the estimated water consumption amount of the user for a next water production period according to the water consumption amount of user in at least the previous water production period, and calculating as well as updating first preset range according to the corresponding estimated water softener operating parameter obtained from estimated water consumption amount;

if the estimated water softener operating parameter is greater than maximum value of the first preset range, the regenerant dosage for next regeneration period is being reduced based on the water softener's specified regenerant dosage;

if the current water softener operating parameter of the water production period is smaller than the minimum value of the first preset range, the regenerant dosage for the next regeneration period is being increased based on water softener's specified regenerant dosage;

if the current water softener operating parameter of the water production period falls within the first preset range, the regenerant dosage is being recalculated so that the unit cost of softened water in the next regeneration period is minimized.

Unless otherwise defined, all terms used herein, including technical and scientific terms, shall have the same meaning as commonly understood by those skilled in the art to which the present invention belongs. It will also be understood that, unless explicitly defined herein, terms such as those defined in the general dictionaries should be interpreted to have meanings consistent with their usage in relevant technical field, rather than being interpreted in an idealized or overly formal sense.

The present invention has been described in detail above with reference to specific embodiments as well as examples, but these should not be construed as limiting the present invention. Numerous variations and modifications may be made by those skilled in the art without departing from the principles of the invention, and such variations and modifications should be considered within the scope of the present invention.

**Claims**

1. A soft water regenerant dosage control method, comprising the following steps:

S1, acquiring operating parameters of a water softener;
S2, if operating parameters of the water softener in a current water production period are greater than maximum value of a first preset range, reducing the dosage of a soft water regenerant on the basis of the specified regenerant dosage of the water softener in the next regeneration period;
if the operating parameters of water softener in the current water production period are smaller than the minimum value of the first preset range, increasing the dosage of the soft water regenerant on the basis of the specified regenerant dosage of the water softener in the next regeneration period; wherein
the first preset range is represented by a water production amount or an operating exchange capacity in a specified period.

2. The soft water regenerant dosage control method according to claim 1, further comprising:
S3, if the operating parameters of water softener in current water production period fall within the first preset range, recalculating the dosage of the soft water regenerant so that the unit cost of softened water in the next regeneration period is minimized.

3. The soft water regenerant dosage control method according to claim 1 or claim 2, further comprising:

S4, calculating estimated water consumption of a user for the next water production period based on user's water consumption in at least the previous water production period, and obtaining corresponding estimated operating parameters of the water softener to update the first preset range according to the estimated water consumption of the user;

S5, if the estimated operating parameters of the water softener exceed the maximum value of the first preset range, reducing the dosage of the soft water regenerant on the basis of a specified regenerant dosage of the water softener in the next regeneration period;

if operating parameters of the water softener in the current water production period are smaller than the minimum value of the first preset range, increasing the dosage of the soft water regenerant on the basis of the specified regenerant dosage of the water softener in the next regeneration period.

4. The soft water regenerant dosage control method according to claim 1 or claim 2, further comprising:

S4, calculating estimated water consumption of a user for the next water production period based on user's water consumption in at least the previous water production period, and obtaining corresponding estimated operating parameters of the water softener to update the first preset range according to the estimated water consumption of the user;

S5', if the estimated operating parameters of the water softener exceed the maximum value of the first preset range, reducing the dosage of the soft water regenerant on the basis of a specified regenerant dosage of the water softener in the next regeneration period;

if operating parameters of the water softener in the current water production period are smaller than the minimum value of the first preset range, increasing the dosage of the soft water regenerant on the basis of the specified regenerant dosage of the water softener in the next regeneration period;

if operating parameters of the water softener in the current water production period fall within the first preset range, recalculating the dosage of the soft water regenerant so that the unit cost of softened water in the next regeneration period is minimized.

5. The soft water regenerant dosage control method according to claim 2, wherein:

when implementing step S3, the calculation of unit cost of softened water comprises at least one of the following:

unit cost of softened water = (periodic regenerant cost + periodic water consumption cost) / periodic water production amount;

unit cost of softened water = periodic water consumption cost / periodic water production amount;

unit cost of softened water = periodic regenerant cost / periodic water production amount.

6. The soft water regenerant dosage control method according to any one of the claims 1 to 5, wherein the operating parameter of water softener comprises at least one of a periodic water production amount, an operating exchange capacity of the water production period, or a water production period.

7. The soft water regenerant dosage control method according to any one of the claims 1 to 5, wherein the increase or decrease of dosage of the soft water regenerant is a specified value or a calibrated value.

8. A computer-readable storage medium storing a computer program, wherein the computer program, when executed, is configured to perform the steps of the method for controlling the dosage of the soft water regenerant according to any one of claims 1 to 7.

9. A soft water regenerant dosage control system, comprising:

a control module, in which a first preset range is stored; if the operating parameter of water softener in the current water production period is greater than the maximum value of the first preset range, dosage of soft water regenerant in the next regeneration period is being reduced based on specified dosage of the regenerant of the water softener;

if operating parameter of the water softener in the current water production period is smaller than minimum value of the first preset range, the dosage of the soft water regenerant is being increased in next regeneration period on the basis of specified dosage of the water softener regenerant; wherein

the first preset range is represented by water production amount of a specified period or the operating exchange capacity, and wherein the operating parameter of the water softener in the current water production period is smaller than the minimum value of the first preset range.

10. The soft water regenerant dosage control system according to claim 9, wherein the control module is further configured to perform the following control:

if the operating parameter of the water softener in the current water production period falls within the first preset range, the soft water regenerant dosage is recalculated so that the unit cost of the softened water in the next regeneration period is minimized.

11. The soft water regenerant dosage control system according to claim 9 or 10, wherein the control module is further configured to perform the following control:

based on the user's water consumption in at least the previous water-making cycle, the estimated water consumption for the next water-making cycle is calculated. The corresponding estimated working parameters of the water softener are obtained according to the estimated water consumption, and the first preset range is updated accordingly;

if estimated operating parameter of water softener is greater than maximum value of the first preset range, the soft water regenerant dosage in the next regeneration period is being reduced based on the specified regenerant dosage of the water softener;

if the operating parameter of the water softener in current water production period is smaller than the minimum value of the first preset range, the soft water regenerant dosage in the next regeneration period is being increased based on the specified regenerant dosage of the water softener.

12. The soft water regenerant dosage control system according to claim 9 or 10, wherein the control module is further configured to perform the following controls:

based on the user's water consumption in at least the previous water-making cycle, the estimated water consumption for the next water-making cycle is calculated. The corresponding estimated working parameters of the water softener are obtained according to the estimated water consumption, and the first preset range is updated accordingly;

if estimated operating parameter of water softener is greater than maximum value of the first preset range, the soft water regenerant dosage in the next regeneration period is being reduced based on the specified regenerant dosage of the water softener;

if the operating parameter of the water softener in current water production period is smaller than the minimum value of the first preset range, the soft water regenerant dosage in the next regeneration period is being increased based on the specified regenerant dosage of the water softener;

if the operating parameter of water softener in the current water production period falls within the first preset range, recalculating dosage of soft water regenerant such that the unit cost of softened water is minimized in the next regeneration period.

13. The soft water regenerant dosage control system according to claim 9 or 10, wherein the calculation of unit cost of softened water comprises at least one of the following calculation methods:

**unit** cost of softened water = (periodic regenerant cost + periodic water consumption cost) / periodic water production amount;

unit cost of softened water = periodic water consumption cost / periodic water production amount;

unit cost of softened water = periodic regenerant cost / periodic water production amount.

**14.** The soft water regenerant dosage control system according to any one of claims 9 to 13, wherein the operating parameter of water softener comprises at least one of a periodic water production amount, an operating exchange capacity of the water production period, or a water production period.

**15.** The soft water regenerant dosage control system according to any one of claims 9 to 13, wherein the increase or decrease in the dosage of soft water regenerant is a specified value or a calibrated value.

S1, Acquiring the operating parameters of the water softener

S2, Adjusting the soft water regenerant dosage for a next regeneration period based on a comparison between the water softener operating parameter of the current water production period and a first preset range

FIG. 1

S1,Acquiring the operating parameters of the water softener

S2,Adjusting the soft water regenerant dosage for a next regeneration period based on a comparison between the water softener operating parameter of the current water production period and a first preset range

S3, If water softener operating parameter of the current water production period falls within the first preset range, recalculating the soft water regenerant dosage so that the unit cost of softened water in the next regeneration period is minimized

FIG. 2

S1,Acquiring the operating parameters of the water softener

S2,Adjusting the soft water regenerant dosage for a next regeneration period based on a comparison between the water softener operating parameter of the current water production period and a first preset range

S4, Based on the user's water consumption in at least the previous water production period, calculating the estimated water consumption for the next water production period, and updating the first preset range accordingly

S5, If the estimated water softener operating parameter is greater than the maximum value of first preset range, reducing soft water regenerant dosage for the next regeneration period based on the water softener's specified regenerant dosage; if the water softener operating parameter of current water production period is smaller than minimum value of the first preset range, increasing the soft water regenerant dosage for the next regeneration period based on the water softener's specified regenerant dosage.

FIG. 3

S1,Acquiring the operating parameters of the water softener

S2,Adjusting the soft water regenerant dosage for a next regeneration period based on a comparison between the water softener operating parameter of the current water production period and a first preset range

S3， If water softener operating parameter of the current water production period falls within the first preset range, recalculating the soft water regenerant dosage so that the unit cost of softened water in the next regeneration period is minimized

S4， Based on the user's water consumption in at least the previous water production period, calculating the estimated water consumption for the next water production period, and updating the first preset range accordingly

S5,If the water softener operating parameter of current water production period is smaller than minimum value of the first preset range, increasing the soft water regenerant dosage for the next regeneration period based on the water softener's specified regenerant dosage

FIG. 4

S1,Acquiring the operating parameters of the water softener

S2,Adjusting the soft water regenerant dosage for a next regeneration period based on a comparison between the water softener operating parameter of the current water production period and a first preset range

S4， Based on the user's water consumption in at least the previous water production period, calculating the estimated water consumption for the next water production period, and updating the first preset range accordingly

S5， If the estimated water softener operating parameter is greater than the maximum value of first preset range, reducing soft water regenerant dosage for the next regeneration period based on the water softener's specified regenerant dosage
If the water softener operating parameter of current water production period is smaller than minimum value of the first preset range, increasing the soft water regenerant dosage for the next regeneration period based on the water softener's specified regenerant dosage
If water softener operating parameter of the current water production period falls within the first preset range, recalculating the soft water regenerant dosage so that the unit cost of softened water in the next regeneration period is minimized

FIG. 5

S1,Acquiring the operating parameters of the water softener

S2,Adjusting the soft water regenerant dosage for a next regeneration period based on a comparison between the water softener operating parameter of the current water production period and a first preset range

S3，If water softener operating parameter of the current water production period falls within the first preset range, recalculating the soft water regenerant dosage so that the unit cost of softened water in the next regeneration period is minimized

S4，Based on the user's water consumption in at least the previous water production period, calculating the estimated water consumption for the next water production period, and updating the first preset range accordingly

S5，If the estimated water softener operating parameter is greater than the maximum value of first preset range, reducing soft water regenerant dosage for the next regeneration period based on the water softener's specified regenerant dosage

If the water softener operating parameter of current water production period is smaller than minimum value of the first preset range, increasing the soft water regenerant dosage for the next regeneration period based on the water softener's specified regenerant dosage

If water softener operating parameter of the current water production period falls within the first preset range, recalculating the soft water regenerant dosage so that the unit cost of softened water in the next regeneration period is minimized

FIG. 6

## INTERNATIONAL SEARCH REPORT

International application No.

**PCT/CN2023/113227**

| A. | CLASSIFICATION OF SUBJECT MATTER |
|---|---|

G05B19/04(2006.01)i; C02F1/42(2023.01)i

According to International Patent Classification (IPC) or to both national classification and IPC

| B. | FIELDS SEARCHED |
|---|---|

Minimum documentation searched (classification system followed by classification symbols)

IPC: C02F1, G05B19

Documentation searched other than minimum documentation to the extent that such documents are included in the fields searched

Electronic data base consulted during the international search (name of data base and, where practicable, search terms used)

CNTXT, ENTXTC, ENTXT, VEN: 软化, 软水, 再生剂, 再生, 还原剂, 还原, 剂, 盐, 量, 调整, 调节, 增, 减, 升, 降, 高, 低, 水量, 交换容量, 上一, 上次, 上回, 下一, 下次, 下回, 周期, 循环, 用水, 需求, 需要, 用户, 成本, 最大, 最小, softening, water, regeneration, reduction, agent, salt, amout, volume, adjust, add, increase, decrease, exchange capacity, last, next, period, cycle, need, demand, user, cost, max, min

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 109704440 A (JUDO WASSERAUFBEREITUNG) 03 May 2019 (2019-05-03) description, paragraphs 0007-0085, and figures 1-8 | 1-15 |
| Y | CN 115490299 A (FOSHAN SHUNDE MIDEA WATER DISPENSER MANUFACTURING CO., LTD. et al.) 20 December 2022 (2022-12-20) description, paragraphs 0002-0004 and 0068-0206, and figures 1-7 | 1-15 |
| A | CN 108622980 A (WUHU MIDEA KITCHEN & BATH APPLIANCES MANUFACTURING CO., LTD.) 09 October 2018 (2018-10-09) entire document | 1-15 |
| A | CN 106219673 A (NANJING FOBRITE ENVIRONMENTAL TECHNOLOGY CO., LTD.) 14 December 2016 (2016-12-14) entire document | 1-15 |
| A | CN 112875801 A (ZHUHAI GREE ELECTRIC APPLIANCES INC.) 01 June 2021 (2021-06-01) entire document | 1-15 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/113227** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2003136057 A (KURITA WATER INDUSTRIES LTD.) 13 May 2003 (2003-05-13)<br>    entire document | 1-15 |
| A | US 2007199900 A1 (ECOWATER SYSTEMS LLC) 30 August 2007 (2007-08-30)<br>    entire document | 1-15 |

Form PCT/ISA/210 (second sheet) (July 2022)

## INTERNATIONAL SEARCH REPORT
### Information on patent family members

International application No.

**PCT/CN2023/113227**

| Patent document cited in search report | | | Publication date (day/month/year) | Patent family member(s) | | | Publication date (day/month/year) |
|---|---|---|---|---|---|---|---|
| CN | 109704440 | A | 03 May 2019 | EP | 3476807 | A1 | 01 May 2019 |
| | | | | EP | 3476807 | B1 | 25 November 2020 |
| | | | | DE | 102017219063 | A1 | 25 April 2019 |
| | | | | PL | 3476807 | T3 | 26 July 2021 |
| | | | | ES | 2842949 | T3 | 15 July 2021 |
| CN | 115490299 | A | 20 December 2022 | None | | | |
| CN | 108622980 | A | 09 October 2018 | None | | | |
| CN | 106219673 | A | 14 December 2016 | None | | | |
| CN | 112875801 | A | 01 June 2021 | None | | | |
| JP | 2003136057 | A | 13 May 2003 | JP | 4139938 | B2 | 27 August 2008 |
| US | 2007199900 | A1 | 30 August 2007 | US | 7966097 | B2 | 21 June 2011 |

Form PCT/ISA/210 (patent family annex) (July 2022)